# EUROPEAN PATENT APPLICATION

(11) **EP 2 997 814 A1**
(43) Date of publication of application: **23.03.2016**
(21) Application number: 14765172.3
(22) Date of filing: 06.03.2014
(51) Int. Cl.: A01F 12/44, A01D 41/02

(54) **COMBINE HARVESTER FOR RAPE, RICE AND WHEAT**

(30) Priority: 11.03.2013 CN 201310075647
(71) Applicant: Sichuan Yijun Agricultural Machinery Manufacture Ltd., Deyang, Sichuan 618500 (CN)
(72) Inventor: DENG, Chengli, Deyang Sichuan 618500 (CN)
(74) Representative: Winkler, Andreas Fritz Ernst
(86) International application number: PCT/CN2014/072989
(87) International publication number: WO 2014/139371

(57) **Abstract**

A combine harvester for rape, rice and wheat comprises a frame, a power mechanism, a header mechanism (1) mounted on the frame, a threshing mechanism (2) and a grain husk separating device (3). The grain husk separating device (3) comprises a vibration cleaning sieve (4), a blowing husk fan (11) and a husk outlet (9). The vibration cleaning sieve (4) includes a vibration cleaning sieve basket (5) driven by the power mechanism, a upper sieve (6) with angle adjustable sieve pieces and a lower net-shaped sieve (7), which are connected with the vibration cleaning sieve basket (5). On one hand, impurity can be further cleaned by adding the sieve with adjustable angle sieve pieces to the vibration cleaning sieve basket. Moreover, the cleaning of the rice, wheat and rape can be taken into account by adjusting the angle of sieve pieces to control the size of sieve mesh, thus realizing a combined harvesting of rice, wheat and rape.

## Description

### TECHNICAL FIELD

The present invention refers to a combine harvester, in particular an environmental protection combine harvester for rape, rice and wheat with a variety of functions, such as harvesting, threshing and cleaning, straw smashing, rotary tillage and deep burial.

### BACKGROUND OF THE PRESENT INVENTION

At present, the operating type of existing combine harvester is mostly stalk cutting before threshing, which is of high energy consumption, too low power and high loss rate of grain. Burning is the only way because stalk cutting first can't return the stalk into the field, thereby bringing a series of environmental pollution problems. Chinese patent 200820065192 disclosed an "Environmental Protection Harvester", which comprises a power mechanism, a spike inlet mechanism, a spike delivery roller, an axial-flow threshing device, a vibration cleaning device, a grain collecting granary and a rotary tillage mechanism. But there exists some shortcomings: the grain husk separating device comprises a vibration cleaning device, a blowing husk fan, and a husk outlet, the sieve of vibration cleaning device is net-shaped, which leads to insufficient selection, i.e. the harvested crop remains a mass of impurities, and the efficiency of selection is too low if the mesh of net-shaped sieve is too small, which is unable to complete threshing and cleaning while harvesting. Besides, the cleaning of the rice, wheat and rape can't be taken into account in vibration cleaning device of the patent.

### SUMMARY OF THE PRESENT INVENTION

The purpose of the present invention is to overcome shortcomings as described above by providing a combine harvester for rape, rice and wheat, which can clean and dispose of impurity well in the process of vibration cleaning, besides, the cleaning of the rice, wheat and rape can be taken into account.

A solution of the present invention is to provide a combine harvester for rape, rice and wheat, comprising a frame, a power mechanism, a header mechanism mounted on the frame, a threshing mechanism behind the header mechanism, a feeding mechanism and a grain husk separating device connected with the outlet of threshing mechanism; the grain husk separating device comprises a vibration cleaning sieve, a blowing husk fan and a husk outlet; characterized in that the vibration cleaning sieve includes a vibration cleaning sieve basket driven by the power mechanism, a upper sieve with angle adjustable sieve pieces and a lower net-shaped sieve, which are connected with the vibration cleaning sieve basket.

On one hand, impurity can be further cleaned by adding the sieve with adjustable angle sieve pieces to the vibration cleaning sieve basket. Moreover, the cleaning of the rice, wheat and rape can be taken into account by adjusting the angle of sieve pieces to control the size of sieve mesh, thus realizing a combined harvesting of rice, wheat and rape.

In the solution of the present invention, the sieve with angle adjustable sieve pieces includes a sieve bar, two ends of which are configured in parallel with the side end of the vibration cleaning sieve basket, a sieve piece fixed on the sieve bar. The fitting place of sieve bar and adjustment sheet is curved into U shape, the adjustment sheet is connected on the adjustment bar, which is connected with the adjustment handle. Rotate the adjustment handle to drive the horizontal movement of adjustment bar and adjustment sheet, the movement of adjustment sheet drives the movement of lower end of U shape of sieve bar, and two ends of sieve bar are configured in the side end of the vibration cleaning sieve basket (5), so the movement of adjustment sheet is formed to rotate the sieve bar, thereby adjusting the angle of sieve bar. When the threshing and cleaning of rice and wheat are executed, put the adjustment sieve pieces vertically for smooth leaking of rice and wheat grain due to the large mesh between sieve pieces. When the threshing and cleaning of rape are executed, put the adjustment sieve pieces horizontally for smooth leaking of rape grain and preventing leaking of rape husk due to the small mesh between sieve pieces.
In the solution of the present invention, the sieve is ∩ shaped or triangle. Each sheet is closed to the sieve bar fixedly, and the front end of later sieve is near to the back end of prior sieve. Mesh is the interstice between the corresponding adjacent sieve pieces and front-back sieve pieces.

In the solution of the present invention, the sieve with angle adjustable sieve pieces exists two layers, the upper one is located in the outlet joint of threshing mechanism, toward the forepart of it, the sieve bar is fixed on the vibration cleaning sieve basket, the sieve piece on which is scale-shaped and mesh is semi-closed, the sieve with angle adjustable at the back extend to the middle part of vibration cleaning sieve basket, and the lower one are all sieves with angle adjustable sieve pieces, which extend to the husk outlet from the end of scale-shaped sieve. Fix the scale-shaped sieve pieces on the front end of outlet joint of threshing mechanism, the purpose of which is to separate matters from threshing mechanism by scale-shaped sieve pieces to distribute the matters evenly into sieve with angle adjustable sieve pieces thereafter to clean for the first time. In the first cleaning, most husks of wheat, rice or rape are blew from husk outlet by blowing husk fan, while grain of wheat, rice or rape and a small part of husks of wheat, rice or rape are leak from upper sieve with angle adjustable sieve pieces to lower sieve with angle adjustable sieve pieces to be cleaned again. After being cleaned by lower sieve with angle adjustable sieve pieces, the grain of wheat, rice or rape leak into the net-shaped sieve to execute finally cleaning, after that, they can be stored directly in general.

The advantage of the present invention is the vibration cleaning sieve includes a vibration cleaning sieve basket driven by the power mechanism, an upper sieve with angle adjustable sieve pieces and a lower net-shaped sieve, which are connected with the vibration cleaning sieve basket. A cleaning process for impurities is added, and the process can clean the impurities repeatedly, so the present invention can clean and dispose of impurity well, and the impurity rate after cleaning is reduced to 0.01%. Moreover, the cleaning of the rice, wheat and rape can be taken into account by adjusting the angle of sieve pieces to control the size of sieve mesh, thus realizing a combined harvesting of rice, wheat and rape.

### BREIF DESCRIPTION OF THE PRESNET INVENTION

FIG.1 is a structure diagram of the present invention.
FIG. 2 is a structure diagram of vibration cleaning sieve.
FIG.3 is an angle adjustment control structure diagram of sieve pieces.
FIG.4 is a shape diagram of scale-shaped sieve.
FIG.5 is a shape diagram of triangle sieve piece.

### DETAILED DESCRIPTION OF THE PRESENT INVENTION

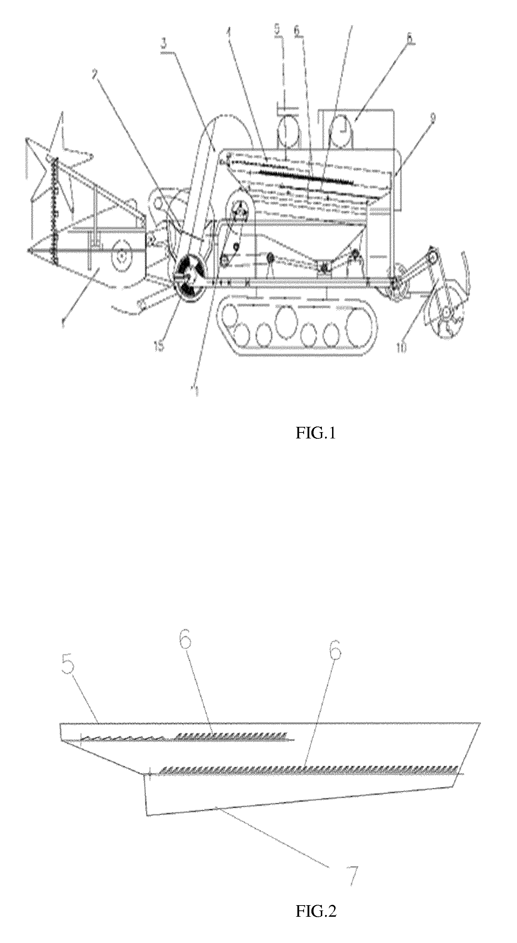

As FIG.1 shown, the present invention provides a combine harvester for rape rice and wheat, comprising a frame, a power mechanism, a header mechanism (1) mounted on the frame, a threshing mechanism (2), a feeding mechanism (15) and a grain husk separating device (3), a grain collecting box (8), and a rotary tillage mechanism; the grain husk separating device (3) comprises a vibration cleaning sieve (4), a blowing husk fan (11) and a husk outlet (9); wherein the vibration cleaning sieve (4) includes a vibration cleaning sieve basket (5) driven by the power mechanism, a upper sieve with angle adjustable sieve pieces (6) and a lower net-shaped sieve (7), which are connected with the vibration cleaning sieve basket (5).

Combine harvester is moving forward driven by power mechanism when harvesting, with the movement of combine harvester, crops ready for harvest are absorbed in and harvested by header mechanism (1) and the harvested crops are fed into threshing mechanism (2), at the back of header mechanism (1). Bury the straw particle formed by threshing into soil by rotary tillage mechanism (10); the grain of rice, wheat or rape and other grains obtained by threshing are out from grain outlet and fed into grain husk separating device (3) to clean by feeding mechanism (15), the cleaned grains are stored into grain collection box (8) to be ready for bagging.

In the cleaning of grain husk separating device (3), the vibration of the vibration cleaning sieve basket (5) is driven by the power mechanism, and the vibration of the upper sieve with angle adjustable sieve pieces (6) and the lower net-shaped sieve (7) mounted on the vibration cleaning sieve basket (5) are driven by the vibration cleaning sieve basket (5). As FIG.1 shown, the sieve with angle adjustable sieve pieces (6) and the lower net-shaped sieve (7) are arranged toward the same direction obliquely, grains are fed into grain husk separating device (3) from the top inlet by feeding mechanism (15), and the inlet of grain husk separating device (3) is located above the higher end of the sieve with angle adjustable sieve pieces (6), the grains move in a straight line and are threw up to sieve continually from the upper end of the sieve with angle adjustable sieve pieces (6) to the lower end by vibration; the grains, through the sieving of the sieve with angle adjustable sieve pieces (6), fall into the net-shaped sieve (7) and move in a straight line and are threw up to sieve continually the second time from the upper end of the net-shaped sieve (7) to the lower end by vibration. Meanwhile, blast the grain husk separating device (3) via air inlet, under the net-shaped sieve, (7) by blowing husk fan (11), and discharge the weeds and other impurities on sieve by the husk outlet (9), above the grain husk separating device(3), by air current.

It can clean and dispose of impurity well by several vibrating sieves, and the impurity rate after cleaning is reduced to 0.01%; meanwhile, above sieve with angle adjustable sieve pieces (6) can adjust the angle partly or wholly, the cleaning of the rice, wheat and rape can be taken into account by adjusting the angle of sieve pieces to control the size of sieve mesh, thus realizing a combined harvesting of rice, wheat and rape.

The sieve with angle adjustable sieve pieces (6) can be monolayer and multilayer. In the embodiments of FIG.1 shown, the sieve with angle adjustable sieve pieces (6) is divided into two layers for further increasing the cleaning effect and efficiency of grain husk separating device (3), as FIG.2 shown, the upper sieve with angle adjustable sieve pieces (6') extend to the middle part of vibration cleaning sieve basket(5) from the forepart side wall, and the upper sieve with angle adjustable sieve pieces (6') is divided into front end, which corresponds to the higher end of the upper sieve with angle adjustable sieve pieces (6') and is located in the outlet joint of threshing mechanism (2), i.e. under the inlet of grain husk separating device (3), the corresponding angle of the sieve pieces (17) is fixed; and back end, which corresponds to the lower end of the upper sieve with angle adjustable sieve pieces (6') and the corresponding angle of sieve pieces (17) is adjustable. The angle of sieve pieces (17) of the lower sieve with angle adjustable sieve pieces (6") can all be adjusted, the lower sieve with angle adjustable sieve pieces (6") extend to the rear side wall of vibration cleaning sieve basket (5) from the forepart side wall, and the forepart side wall of vibration cleaning sieve basket (5) is arranged obliquely to make the joint of the lower sieve with angle adjustable sieve pieces (6") and the vibration cleaning sieve basket (5) placed under the joint of the front end and back end of the upper sieve with angle adjustable sieve pieces (6'). In the embodiments of figures shown, specifically, the sieve pieces (17) of front end of the upper sieve with angle adjustable sieve pieces (6') is scale-shaped and mesh is semi-closed, while the lower sieve with angle adjustable sieve pieces (6") extend to the husk outlet (9) from the back end of scale-shaped sieve pieces.

While cleaning, part of the grains from inlet fall into the forepart side wall of oblique vibration cleaning sieve basket (5) via the front end of the upper sieve with angle adjustable sieve pieces (6'), and slip to the lower sieve with angle adjustable sieve pieces (6") to sieve through the forepart side wall of oblique vibration cleaning sieve basket (5); the rest grains move to the back end of the upper sieve with angle adjustable sieve pieces (6'), and a part of the grains fall into the forepart of the lower sieve with angle adjustable sieve pieces (6") after sieving of the back end, If the quantity is too large, the rest not sieved by the back end fall into the back end of the lower sieve with angle adjustable sieve pieces directly to sieve. Separate the grains from inlet by structure of two layers to distribute the grains evenly and execute cleaning, which can increase cleaning efficiency greatly; meanwhile, most grains, even all grains, can be sieved for two times in the final cleaning of net-shaped sieve (7), that is three-time cleaning can be achieved finally, which can increase cleaning efficiency greatly.

The angle adjustment type of the sieve with angle adjustable sieve pieces (6) can be arbitrary, such as each sieve pieces are fixed on the rotation shaft respectively, and sieve frame is mounted via rotation shaft, the gear is mounted on one end of the rotation shaft, driven by the gear of each rotation shafts via a rack and rotation shaft drives corresponding sieve pieces to rotate, thereby adjusting the angle of sieve pieces.

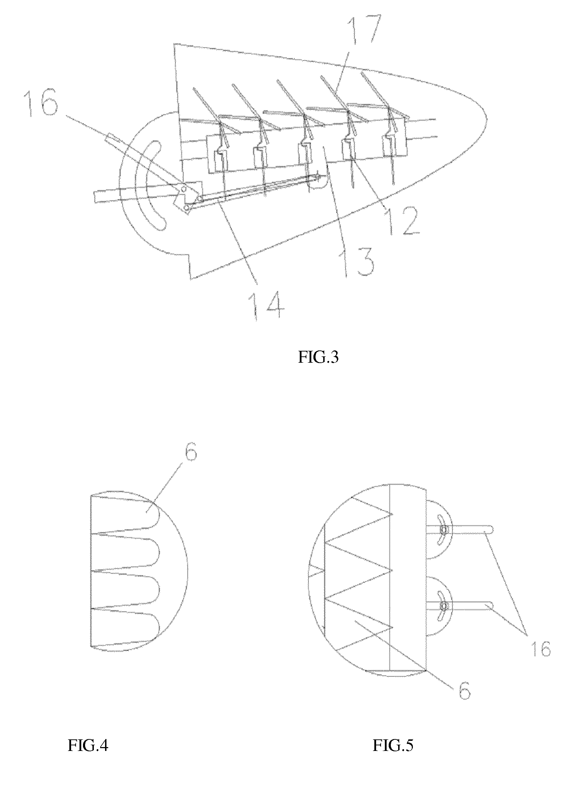

In the embodiments of FIG.1, as FIG.3 shown, the adjustable sieve pieces of sieve with angle adjustable sieve pieces (6) are fixed on the corresponding sieve bar (12) respectively, the same end of each sieve bar (12) is matched with adjustment sheet (13), the fitting place of sieve bar (12) and adjustment sheet is curved into U shape, two ends of each sieve bar (12) are configured in two sides of the vibration cleaning sieve basket (5) through the rotation shaft fixed on the U shape respectively; the adjustment bar (14) and rotary adjustment handle (16) are installed, adjustment sheet (13) is connected on the adjustment bar (14), and the other end of the adjustment bar (14) is connected with the adjustment handle (16), the link mechanism, which drives the sieve bar (12) to rotate around axis, comprises an adjustment handle (16), an adjustment bar (14) and an adjustment sheet (13). Specifically, rotate the adjustment handle (16) to drive the adjustment sheet (13) move horizontally via the adjustment bar (14); the adjustment sheet (13) contact the lower end of U shape of sieve bar (12) and promote its movement, and then promote the axial rotation of sieve bar (12), thereby adjusting the angle of sieve pieces (17). When the threshing and cleaning of rice and wheat are executed, put the adjustment sieve sheet uprightly for large mesh between sieve pieces for smooth leaking of grain of rice and wheat. When the threshing and cleaning of rape are executed, put the adjustment sieve pieces (17) horizontally for small mesh between sieve pieces (17) for smooth leaking of rape grain and preventing leaking of rape husk.

The sieve piece (17) can be in different shapes, such as strip-type, scale-shaped, sawtooth, etc., so long as the mesh size can vary with the angle of sieve piece. The mesh of strip-type sieve is also the strip-type, so scale-shaped sieve is adopted for better cleaning, as embodiments and FIG.4 shown. Each sieve pieces (17) are composed of a list of ∩-shaped pieces arranged in sequence, two adjacent pieces are staggered with each other. As FIG.5 shown, the sawtooth sieve pieces are composed of a list of triangle pieces arranged in sequence, and the arrangement form is the same with that of scale-shaped sieve piece, while the mesh is larger than that of scale-shaped sieve piece.

## Claims

1. A combine harvester for rape, rice and wheat, comprising a frame, a mechanism, a header mechanism (1) mounted on the frame, a threshing mechanism (2) behind the header mechanism (1), a feeding mechanism (15) and a grain husk separating device (3) connected with the outlet threshing mechanism (2) ; the grain husk separating device (3) comprises a vibration cleaning sieve (4), a blowing husk fan (11) and a husk outlet (9); **characterized in that** the vibration cleaning sieve (4) includes a vibration cleaning sieve basket (5) driven by the power mechanism, a upper sieve with angle adjustable sieve pieces and a lower net-shaped sieve (7), which are connected with the vibration cleaning sieve basket (5).

2. A combine harvester for rape, rice and wheat according to Claim 1, wherein the sieve with angle adjustable sieve pieces (6) includes a sieve bar, two end of which configured in parallel (12) with the side end of the vibration cleaning sieve basket (5), a sieve piece (17) fixed on the sieve bar and the fitting place of sieve bar (14) and adjustment sheet is curved into U shape, the adjustment sheet is (13) connected on the adjustment bar, which is connected with the adjustment handle (16).

3. A combine harvester for rape, rice and wheat according to Claim 1 and Claim 2, **characterized in that** the sieve pieces (17) are ∩-shaped or triangular, and each pieces are close to fix on the sieve bar (12).

4. A combine harvester for rape, rice and wheat according to Claim 2, **characterized in that** the sieve with angle adjustable sieve pieces (6) comprises two layers, wherein the upper one is located in the outlet joint of threshing mechanism, toward the forepart of it, the sieve bar (12) is fixed on the vibration cleaning sieve basket, the sieve piece (17) on which is scale-shaped and mesh is semi-closed, the sieve with angle adjustable (6') at the back can be extended into the middle part of vibration cleaning sieve basket, and the lower one is sieve with angle adjustable sieve (6") totally, which is extended to husk outlet (9) from the end of scale-shaped sieve.
